# EUROPEAN PATENT APPLICATION

(11) **EP 4 749 656 A1**
(43) Date of publication of application: **27.05.2026**
(21) Application number: 23946794.7
(22) Date of filing: 26.09.2023
(51) Int. Cl.: G21C 3/34

(54) **SPOT-WELDING JIG FOR SPACER GRID OF NUCLEAR FUEL ASSEMBLY**

(30) Priority: 26.07.2023 KR 20230097522
(71) Applicant: KEPCO NUCLEAR FUEL CO., LTD., Daejeon 34057 (KR)
(72) Inventor: PARK, Sang-joon, Sejong 30153 (KR); SIM, Young-duk, Daejeon 34021 (KR); KIM, Hang-lae, Sejong 30150 (KR)
(74) Representative: Cabinet Netter
(86) International application number: PCT/KR2023/014796
(87) International publication number: WO 2025/023369

(57) **Abstract**

The present invention relates to a spot-welding jig used to spot-weld a spacer grid of a nuclear fuel assembly, the spot-welding jig comprising: a base plate (110); a guide member (120) provided in parallel on the upper surface of the base plate (110); a movable plate (130) provided on the base plate (110) in a way that allows left-and-right movement by the guide member (120); a pair of spacer grid fixing parts (131) provided on the movable plate (130) to support the two end portions of a spacer grid (10); horizontal adjustment parts (140) provided on the base plate (110) to adjust the horizontal (x-axis) position of the movable plate(130); and a vertical adjustment part (150) provided on the base plate (110) to adjust the vertical (y-axis) position of the spacer grid seated on the movable plate (130).

## Description

### Technical Field

The present disclosure relates to a spot-welding fixture configured to perform spot-welding on a spacer grid of a nuclear fuel assembly.

### Background Art

Spacer grids are core components of nuclear fuel assemblies, which, together with nuclear fuel rods, instrumentation tubes, and guide tubes, support and fix uranium-loaded fuel rods at regular intervals and enhance heat transfer from the reactor core to the coolant.

Typically, the spacer grid is manufactured in a lattice structure by arranging a plurality of grid plates in longitudinal and transverse directions. Each grid plate includes slot-shaped cutouts that allow adjacent plates to interlock and form a grid framework. After interlocking the plates to assemble the grid framework, the outer grid plates are spot-welded to complete the spacer grid.

Meanwhile, during pre-assembly, clearances or gaps may occur at the interlocking portions between the grid plates. Such clearances make it difficult to achieve accurate welding at intended assembly positions. Since the spacer grid needs to withstand severe operating conditions inside a nuclear reactor, high structural precision and strict quality control are required throughout the assembly and welding processes.

The spacer grid may generally include inner and outer grid plates, and the material composition and detailed configuration of each grid plate may vary depending on the reactor design and the installation position of the spacer grid, such as an upper, intermediate, or lower region.

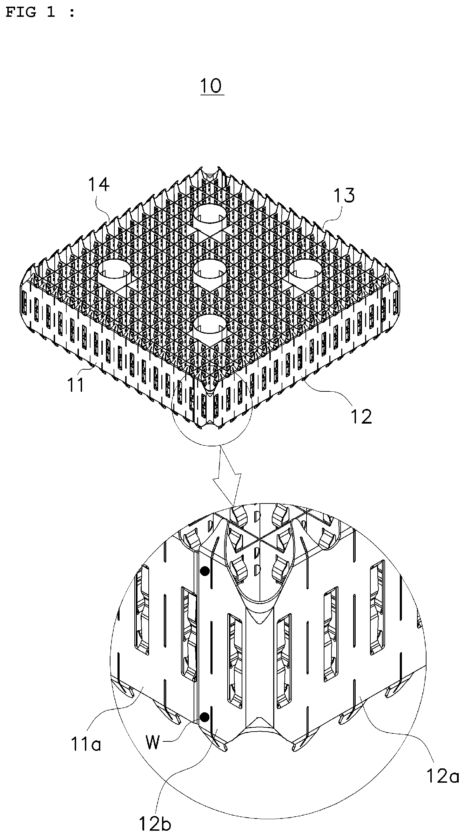

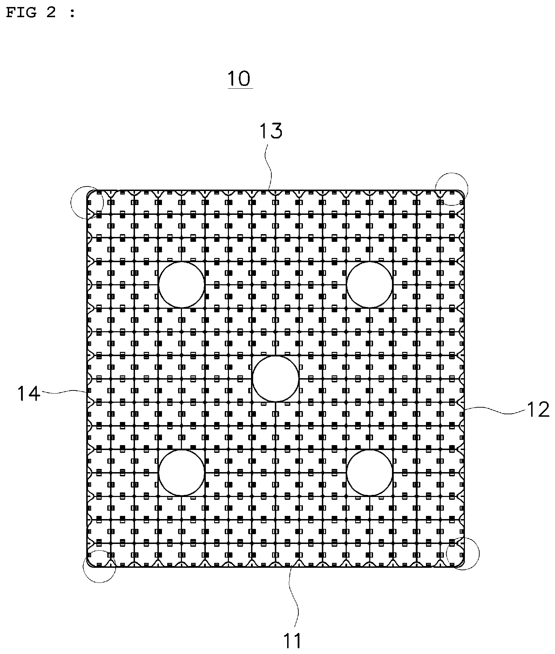

FIG. 1 is a perspective view illustrating a spacer grid of a nuclear fuel assembly, and FIG. 2 is a plan view of the spacer grid. FIGS. 1 and 2 respectively illustrate upper and lower spacer grids of a HIPER16-type nuclear fuel assembly.

With reference to FIGS. 1 and 2, each of the outer grid plates 11 to 14 of the spacer grid 10 has an "L"-shaped configuration. For example, outer grid plates 12a and 12b are composed of a main outer grid plate 12a and a folded outer grid plate 12b, which is formed by folding and extending from the main outer grid plate 21a. A spot-welding operation W is performed between the folded outer grid plate 12b and another main outer grid plate 11a to form the "L"-shaped outer structure. Accordingly, the outer grid plates 11 to 14 are spot-welded at their "L"-shaped folded ends (see FIG. 2).

### [Documents of Related Art]

### [Patent Document]

Patent Document 1: Korean Patent Application Publication No. 10-2016-0061312 (published June. 8, 2016)
Patent Document 2: Korean Patent No. 10-0770944 (published Oct. 26, 2007)

### Disclosure

### Technical Problem

The present disclosure is directed toward providing a spot-welding fixture capable of efficiently performing spot-welding on an "L"-shaped outer grid plate included in a spacer grid of a nuclear fuel assembly, as described in the related art above.

### Technical Solution

In order to achieve the above objective, a spot-welding fixture for a spacer grid of a nuclear fuel assembly according to an embodiment of the present disclosure may include: a base plate; a guide member provided parallel to an upper surface of the base plate; a movable plate configured to move left and right on the base plate via the guide member; a pair of spacer grid fixing parts provided on the movable plate to support opposite ends of the spacer grid 10; a horizontal adjustment part provided on the base plate and configured to adjust a position of the movable plate in a horizontal direction (x-axis); and a vertical adjustment part provided on the base plate and configured to adjust a position of the spacer grid in a vertical direction (y-axis) while seated on the movable plate.

The base plate may include a first groove formed at its center.

The movable plate may include a second groove formed on an upper surface on which the spacer grid is seated, the second groove being elongated and configured to allow insertion of a welding electrode. Furthermore, the first groove may be formed parallel to the spacer grid fixing parts.

The movable plate may be formed with a plurality of vertical through-holes configured so that guide tubes and an instrumentation tube of the spacer grid are positioned therein.

The horizontal adjustment part is provided on left and right sides of the movable plate, and configured to include: a fixing bracket secured to the base plate; an adjustment tip threadably engaged with the fixing bracket; and a first knob provided on the adjustment tip.

The vertical adjustment part is configured to include: a fixed member secured to the base plate; a movable member configured to move forward and backward relative to the fixed member; and a second knob threadably engaged with the fixed member to manipulate the movable member forward and backward.

The spot-welding fixture may further include guide shafts provided between the fixed member and the movable member to guide forward and backward movement of the movable member.

### Advantageous Effects of the Invention

A spot-welding fixture for a spacer grid of a nuclear fuel assembly according to the present disclosure includes: a base plate; a guide member provided parallel to an upper surface of the base plate; a movable plate configured to move left and right on the base plate via the guide member; a pair of spacer grid fixing parts provided on the movable plate to support opposite ends of the spacer grid 10; a horizontal adjustment part provided on the base plate and configured to adjust a position of the movable plate in a horizontal direction (x-axis); and a vertical adjustment part provided on the base plate and configured to adjust a position of the spacer grid in a vertical direction (y-axis) while seated on the movable plate, whereby spot-welding of an L-shaped outer grid plate may be performed easily and conveniently.

### Description of Drawings

FIG. 1 is a perspective view illustrating a spacer grid of a nuclear fuel assembly.
FIG. 2 is a plan view illustrating a spacer grid of a nuclear fuel assembly.
FIG. 3 is a perspective view illustrating a spot-welding fixture for a spacer grid according to an embodiment of the present disclosure.
FIG. 4 is an exploded perspective view illustrating a spot-welding fixture for a spacer grid according to an embodiment of the present disclosure.
FIG. 5 is a plan view illustrating a spot-welding fixture for a spacer grid according to an embodiment of the present disclosure.
FIG. 6(a) and FIG. 6(b) are plan views illustrating examples of the use of a spot-welding fixture for a spacer grid according to an embodiment of the present disclosure.

### Best Mode

The specific structural and functional descriptions presented in the embodiments of the present disclosure are provided solely for illustrative purposes to explain the embodiments in accordance with the concept of the present disclosure. The embodiments described herein may be implemented in various forms. Accordingly, the present disclosure should not be construed as limited to the embodiments described herein, but should be understood to encompass all modifications, equivalents, and alternatives that fall within the spirit and scope of the present disclosure.

Meanwhile, the terms used in this specification are intended solely to describe particular embodiments and are not intended to limit the scope of the present disclosure. The singular forms are intended to include the plural forms unless the context clearly indicates otherwise. In this specification, terms such as "comprise" and "have" are intended to indicate the presence of the stated features, numbers, steps, operations, elements, or components, or combinations thereof, and do not preclude the presence or addition of one or more other features, numbers, steps, operations, elements, components, or combinations thereof.

Hereinafter, exemplary embodiments of the present disclosure will be described in detail with reference to the accompanying drawings.

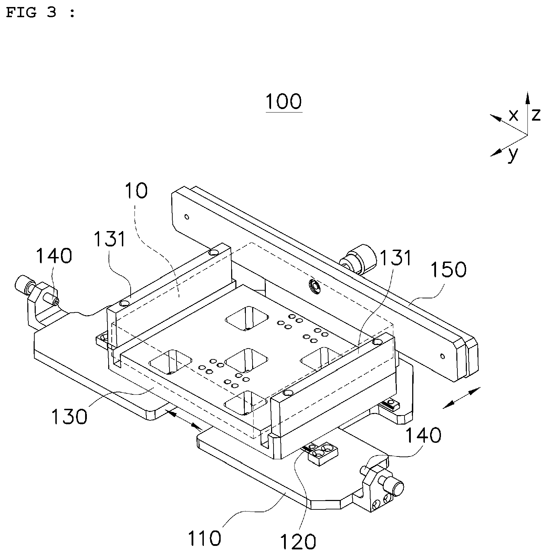

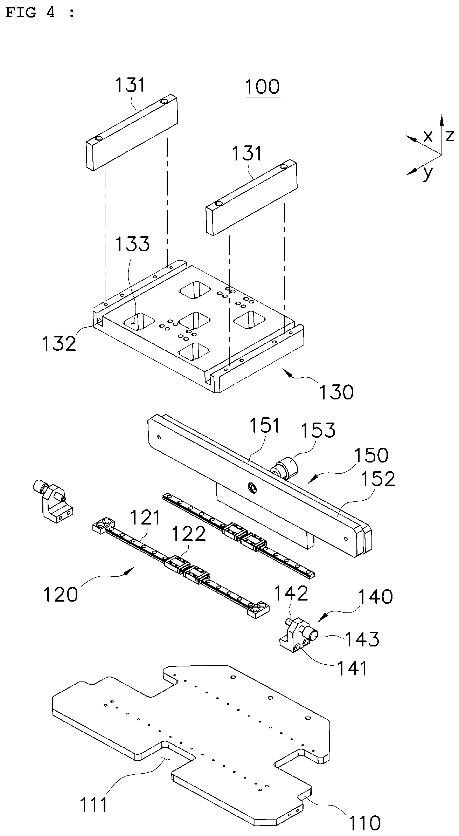

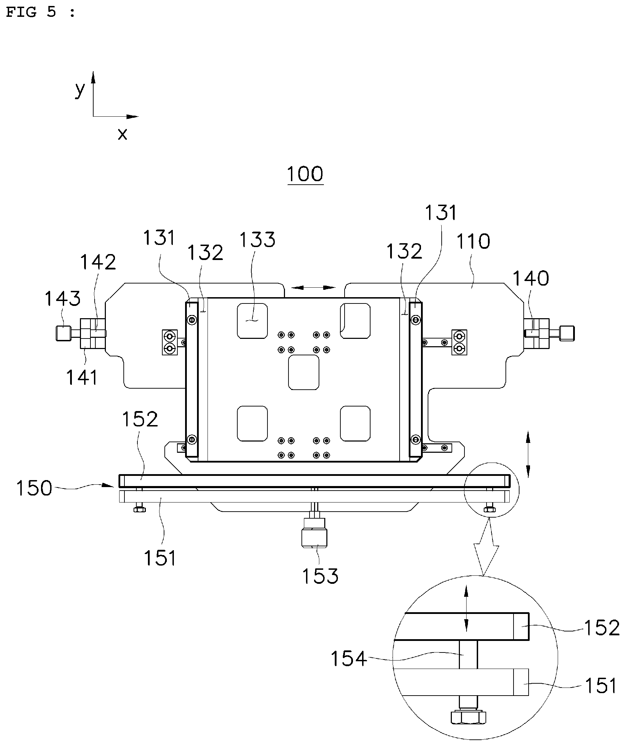

FIG. 3 is a perspective view illustrating a spot-welding fixture for a spacer grid according to an embodiment of the present disclosure, FIG. 4 is an exploded perspective view illustrating a spot-welding fixture for a spacer grid according to an embodiment of the present disclosure, and FIG. 5 is a plan view illustrating a spot-welding fixture 100 of a spacer grid according to an embodiment of the present disclosure.

With reference to FIGS. 3 to 5, a spot-welding fixture 100 for a spacer grid according to an embodiment of the present disclosure includes a base plate 110, a guide member 120, a movable plate 130, a spacer grid fixing part 131, a horizontal adjustment part 140, and a vertical adjustment part 150.

The base plate 110 is a plate-shaped member, and a movable plate 130 is provided on an upper portion of the base plate 110 so as to be slidable left and right (in the x-axis direction) in the mediation of a guide member 120. The guide member 120 includes a guide rail 121 and a guide block 122 that, configured to be movable along the guide rail 121, is assembled to a rear surface of the movable plate 130. In the present embodiment, the guide members 120 are provided as two pieces and are arranged side by side. The base plate 110 may have a first recess groove 111 formed at its center, thereby preventing interference between the base plate 110 and a welding electrode during welding.

The movable plate 130 is a member on which the spacer grid 10 is seated and includes a pair of spacer grid fixing parts 131 configured to support opposite ends of the spacer grid 10, wherein a distance between the two spacer grid fixing parts 131 substantially corresponds to a length of the spacer grid 10. The movable plate 130 may be provided with second grooves 132 formed therein for the insertion of welding electrodes, the second grooves 132 being oriented parallel to the spacer grid fixing parts 131. The movable plate 130 may further include a plurality of vertical through-holes 133 configured to respectively accommodate guide tubes and an instrumentation tube of the spacer grid 10.

The horizontal adjustment part 140 is provided on the base plate 110 to adjust a position of the movable plate 130 in a horizontal direction (x-axis), and is disposed on left and right sides of the movable plate 130, respectively. The horizontal adjustment part 140 includes a fixed bracket 141 secured to the base plate 110, an adjustment tip 142 threadably engaged with the fixed bracket 141, and a first knob 143 at an end of which the adjustment tip 142 is provided. The adjustment tip 142 may be configured to move forward and backward by operating the first knob 143 in a forward or reverse direction, thereby finely adjusting the position of the movable plate 130 in the horizontal direction (x-axis).

The vertical adjustment part 150 is provided on the base plate 110 to adjust a position of the spacer grid 10 seated on the movable plate 130 in a vertical direction (y-axis), and includes a fixed member 151 secured to the base plate 110, a movable member 152 disposed parallel to the fixed member 151 and configured to move forward and backward with respect to the fixed member 151, and a second knob 153 threadably engaged with the fixed member 151 to manipulate the movable member 152 forward or backward. A plurality of guide shafts 154 may be provided between the fixed member 151 and the movable member 152, and the guide shafts 154 serve to guide the movable member 152 to smoothly move forward and backward in the vertical direction in parallel with respect to the fixed member 151, when the movable member 152 moves in the vertical direction (y-axis). In the present embodiment, the second knob 153 is disposed at a central portion of the movable member 152, and the guide shafts 154 are provided on the left and right sides with the second knob 153 at the center.

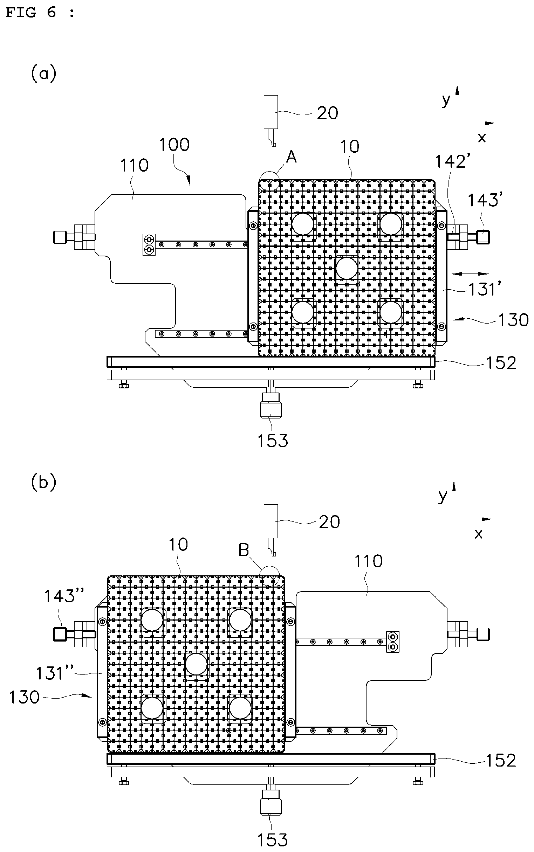

FIG. 6(a) and FIG. 6(b) are plan views illustrating examples of use of a spot-welding fixture for a spacer grid according to an embodiment of the present disclosure.

With reference to FIG. 6(a), after the spacer grid 10 is seated on the movable plate 130, the movable plate 130 is brought into close contact with a right side of the base plate 110. At this time, an upper left portion of the spacer grid 10 is positioned adjacent to the welding electrode 20. Thereafter, by manipulating a first knob 143' on the right side, a corresponding adjustment tip 142' may push a fixing part 131' on the right side of the spacer grid 10, thereby finely adjusting the position of the movable plate 130 in a horizontal direction (x-axis). In addition, by manipulating the second knob 153, the movable member 152 may move upward and downward, thereby finely adjusting a position of the spacer grid 10 in a vertical direction (y-axis). Through this process, a spot-welding of an outer grid plate A at the upper left portion of the spacer grid 10 may be accomplished.

Next, as illustrated in FIG. 6(b), after the movable plate 130 is brought into close contact with a left side of the base plate 110, horizontal and vertical positions of the spacer grid 10 are finely adjusted by manipulating a first knob 143" on the left and the second knob 153. Thereafter, spot welding of an outer grid plate B positioned at an upper right portion of the spacer grid 10 is accomplished. Through this process, the spot-welding of the spacer grid 10 is completed at four positions on the outer grid plates.

The present disclosure described above is not limited to the embodiments and the accompanying drawings, and it will be apparent to those skilled in the art to which the present disclosure pertains that various substitutions, modifications, and changes may be made without departing from the spirit and scope of the present disclosure.

**[Description of the Reference Numerals in the Drawings]**

| | | | |
|---|---|---|---|
| 110 | Base plate | 111 | First groove |
| 120 | Guide member | 130 | Movable plate |
| 131 | Spacer grid fixing part | 132 | Second groove |
| 133 | Through-hole | 140 | Horizontal adjustment part |
| 141 | Fixed bracket | 142 | Adjustment tip |
| 143 | First knob | 150 | Vertical adjustment part |
| 151 | Fixed member | 152 | Movable member |
| 153 | Second knob | 153 | Guide shaft |

## Claims

1. A spot-welding fixture for a spacer grid of a nuclear fuel assembly, the spot-welding fixture comprising:
a base plate;
a guide member provided parallel to an upper surface of the base plate;
a movable plate configured to move left and right on the base plate via the guide member;
a pair of spacer grid fixing parts provided on the movable plate to support opposite ends of the spacer grid (10);
a horizontal adjustment part provided on the base plate and configured to adjust a position of the movable plate in a horizontal direction (x-axis); and
a vertical adjustment part provided on the base plate and configured to adjust a position of the spacer grid in a vertical direction (y-axis) while seated on the movable plate.

2. The spot-welding fixture of claim 1, wherein the base plate comprises a first groove formed at its center.

3. The spot-welding fixture of claim 1, wherein the movable plate comprises a second groove formed on an upper surface on which the spacer grid is seated, the second groove being elongated and configured to allow insertion of a welding electrode.

4. The spot-welding fixture of claim 3, wherein the second groove is formed parallel to the spacer grid fixing parts.

5. The spot-welding fixture of claim 1, wherein the movable plate is formed with a plurality of vertical through-holes configured so that guide tubes and an instrumentation tube of the spacer grid are positioned therein.

6. The spot-welding fixture of claim 1, wherein the horizontal adjustment part is provided on left and right sides of the movable plate, and configured to comprise:
a fixing bracket secured to the base plate;
an adjustment tip threadably engaged with the fixing bracket; and
a first knob provided on the adjustment tip.

7. The spot-welding fixture of claim 1, wherein the vertical adjustment part is configured to comprise:
a fixed member secured to the base plate;
a movable member configured to move forward and backward relative to the fixed member; and
a second knob threadably engaged with the fixed member to manipulate the movable member forward and backward.

8. The spot-welding fixture of claim 7, further comprising:
guide shafts provided between the fixed member and the movable member to guide forward and backward movement of the movable member.
